# EUROPEAN PATENT APPLICATION

(11) **EP 2 103 632 A1**
(43) Date of publication of application: **23.09.2009**
(21) Application number: 08102794.8
(22) Date of filing: 20.03.2008
(51) Int. Cl.: C08F 2/34, C08F 210/16

(54) **Polymerisation process**

(71) Applicant: INEOS EUROPE LIMITED, Lyndhurst Hampshire SO43 7FG (GB)
(72) Inventor: The designation of the inventor has not yet been filed
(74) Representative: King, Alex

(57) **Abstract**

The present invention relates to a polymerisation process and in particular to a process for the copolymerisation of ethylene and an α-olefin comonomer having 7 to 10 carbon atoms in a fluidised bed gas phase reactor in the presence of a multi-site Ziegler-Natta polymerisation catalyst **characterised in that** (i) said process is operated in condensed mode, (ii) the amount of said α-olefin is maintained below that at which substantial condensation in the reactor occurs and (iii) at least one of the following apply:
a) the catalyst has an uptake rate of 1-octene of at least 700;
b) the polymerisation is performed in the presence of an activity promoter.

## Description

The present invention relates to a polymerization process and in particular to a polymerisation process for the copolymerisation of ethylene and higher α-olefins performed in the gas phase.

The gas phase process for the polymerisation of olefins has been widely used in particular for the copolymerisation of ethylene and α-olefins. Commercial production of such copolymers using Ziegler-Natta catalysts has however, traditionally been limited to the copolymerisation of ethylene and α-olefins having carbon chain lengths of C6 (1-hexene) or less used for example for the preparation of linear low density polyethylene (LLDPE).

In particular, higher α-olefins have higher boiling points and when used in gas phase polymerisation processes condensation of the higher α-olefins may occur at concentrations typically used for the production of LLDPE when using Ziegler-Natta catalysts. This may result in problems with continuous and smooth operation.

Earlier documents which seek to avoid the condensation of 1-octene in processes for producing ethylene/1-octene co-polymers in the presence of Ziegler-Natta based catalysts include US 5,100,979, US 5,106,926 and US 6,521,722. In particular, US 5,100,979 and US 5,106,926 describe processes in which it is necessary to maintain the partial pressures and reactor temperatures to operate at temperatures above the dew point of the 1-octene. US 6521722 describes a process where the pressure and temperature of the reaction zone are set so as to define an operating point from 0.2 to 5.0 bar below the dew point of the reaction mixture above which condensation occurs.

The limits set by the necessity of avoiding condensation limit catalyst productivity and production rate in processes with 1-octene as a comonomer using Ziegler-Natta systems. In particular, a commercial process for the production of ethylene/1-octene co-polymers using a Ziegler-Natta catalyst would require the following:
(1) a minimum catalyst productivity, which is defined as the amount of polymer produced per unit of catalyst. This is principally dependent on the availability of ethylene to the catalyst, and hence on the ethylene partial pressure.
(2) a minimum production rate, which is defined as the amount of polymer produced per unit time. For a particular size reactor, this is principally dependent on the ability to provide cooling to the reactor.
(3) ability to produce the desired copolymer (e.g. melt index, density). This is principally dependent on the ability to incorporate the required ratio of 1-octene/ethylene into the polymer, which depends on the respective 1-octene and ethylene partial pressures in the reactor.

However, the partial pressure of octene is limited by the desire to prevent condensation of the 1-octene in the reactor, and in particular to keep the reactor temperature above the Dew Point (all else being equal the Dew Point increases with 1-octene partial pressure). Since the ratio of 1-octene:ethylene is important for the desired product, the ethylene partial pressure is limited by the 1-octene partial pressure. For any polymer which requires a reasonable level of incorporation of the 1-octene comonomer in the polymer (greater than 5wt%), such as typical linear low density polyethylene (LLDPE), and hence a reasonably high 1-octene:ethylene molar ratio (greater than about 0.02:1) this results in a relatively low maximum ethylene partial pressure, which in turn results in a low catalyst productivity.

Since an increase in octene partial pressure will raise the Dew Point of the reactor gas phase, this will also limit the maximum quantity of an inert condensable (such as pentane or hexane ) that can be added to the gas phase composition. Inert condensable components are added in order to increase the heat exchange capacity of the reactor gas. The maximum quantity that can be added is fixed by the Dew Point of the gas phase, which is typically set 5 to 15°C below the polymerisation temperature. A limit on the quantity of inert condensable will therefore lead to a limitation of the heat exchange removal capability of the reactor gas, which will reduce the maximum production rate of a given commercial reactor.

WO 2005/070976 describes a gas phase process for the copolymerization of ethylene and an α-olefin having 7 to 10 carbon atoms in the presence of a single site polymerization catalyst, in the condensed mode and wherein the amount of α-olefin is maintained below that at which substantial condensation occurs. This is possible, according to the teaching of WQ 2005/070976, because single-site polymerization catalysts have a single site with single activity and selectivity and a high ability to incorporate higher co-monomers into the polyethylene formed, meaning that very low concentrations of higher comonomers, such as 1-octene, are required in the gas phase to give the desired comonomer content in the resultant polymer.

In contrast, and consistent with the limitations described above, WO 2005/070976 states that traditional Ziegler-Natta catalysts are not suitable because they have a number of catalytic sites/species with varying activities and abilities to incorporate comonomer.

In fact, we have now surprisingly found that the process similar to WO 2005/070976 can be successfully applied to Ziegler-Natta catalysts such that higher α-olefins may be successfully employed in a commercial gas phase process provided that a catalyst which provides a high uptake rate of comonomer is used and/or a suitable activity promoter is used. This is despite the fact that such Ziegler-Natta catalysts generally have a lower rate of incorporation of comonomer into the polymer than metallocene catalysts, requiring higher comonomer: ethylene ratios than for metallocene catalysts.

Thus according to the present invention there is provided a process for the copolymerisation of ethylene and an α-olefin comonomer having 7 to 10 carbon atoms in a fluidised bed gas phase reactor in the presence of a multi-site Ziegler-Natta polymerisation catalyst **characterised in that** (i) said process is operated in condensed mode, (ii) the amount of said α-olefin is maintained below that at which substantial condensation in the reactor occurs and (iii) at least one of the following apply:
a) the catalyst has an uptake rate of 1-octene of at least 700;
b) the polymerisation is performed in the presence of an activity promoter.

Condensed mode is defined as the process of purposefully introducing a recycle stream having a liquid and a gas phase into the reactor such that the weight percent of liquid based on the total weight of the recycle stream is greater than about 2.0 weight percent.

Condensed mode operation is fully described in, for example, EP 89691, US 4,543,399, US 4,588,790, EP 696293, US 5,405,922, EP 699213 and US 5,541,270.

The α-olefin comonomer is maintained below that at which substantial condensation in the reactor occurs by maintaining the temperature and partial pressures in the reaction zone accordingly.

The comonomer content of the copolymer may be controlled by the partial pressure of the various monomers. The partial pressure of the comonomer in the reaction zone may be maintained up to an amount which would, at a temperature of about 10°C less than the temperature of the monomer mixture in the reaction zone, be the saturated vapour pressure of the comonomer to prevent condensation of the comonomer in the reaction zone.

In a first embodiment, the catalyst used in the process of the present invention has an uptake rate of 1-octane of at least 700. "Uptake rate of 1-octene" as defined herein is the relative activity of the catalyst to 1-octene incorporation under defined conditions, and is equal to the 1-octene content in a produced polymer in wt% (which is suitably measured by NMR) divided by the molar ratio of 1-octene:ethylene in the gas phase in the reactor for a polymer produced under defined conditions. Thus, for example, if a copolymer having a 1-octene content of 15wt% is obtained using a gas phase composition comprising a molar ratio of said 1-octene to ethylene of 0.02, the uptake rate is 750.

As defined herein, the uptake rate of 1-octene for a particular catalyst is that measured under the following conditions:

Ethylene at a partial pressure of 5 bar is copolymerised with the relevant catalyst at a temperature of 84°C, in the presence of 1-octene at a molar ratio of 1-octene to ethylene of 0.02, hydrogen at a partial pressure of 1 bar, iso-pentane at a partial pressure of 1 bar, and with a nitrogen balance to give a total pressure of 20 bar. No activity promoter is used.

The uptake rate is measured in the absence of condensation in the reactor. The reactor dimensions are not especially critical, and nor is the fluidisation velocity as long as a well fluidised bed is maintained (e.g. the velocity is above the minimum fluidisation velocity to give a (stable) fluidised bed in the reactor).

In the first embodiment of the present invention, the catalyst has an uptake rate of 1-octene of at least 700. For avoidance of doubt, the uptake rate of 1-octene is used as a characteristic of the catalyst, and does not provide any limitation on the comonomer to be used in the process of the present invention or the particular reaction conditions under which it is used. Thus, although the catalyst is defined as having a specific 1-octene uptake rate, it may be used in the process of the present invention for reaction of ethylene with any C7-C10 comonomer.

Preferably, the catalyst has an uptake rate of 1-octene of at least 750, for example at least 800.

Use of a catalyst with a suitably high uptake rate of 1-octene means that a polymer with the required comonomer content may be obtained even using relatively low ratios of comonomer to ethylene in the gas phase, which in turn allows higher partial pressure of ethylene in the gas phase to be used (for a particular comonomer partial pressure), resulting in an increased catalyst productivity.

In a second, preferred, embodiment, the polymerisation process of the present invention is performed in the presence of an activity promoter.

A preferred activity promoter is a monohalogenated hydrocarbon compound, especially as described in WO 03/082935.

In particular, the monohalogenated hydrocarbon compound may be a chlorinated or brominated hydrocarbon. It may be a monohalogenated hydrocarbon of general formula R-X in which R denotes an alkyl group containing from 1 to 10, preferably from 2 to 7 carbon atoms, an aralkyl or aryl group containing from 6 to 14, preferably from 6 to 10 carbon atoms, and X denotes a halogen atom such as chlorine or bromine. Preferably, the monohalogenated hydrocarbon compound is chosen amongst methylene chloride, ethyl chloride, propyl chloride, butyl chloride, pentyl chloride, hexyl chloride and heptyl chloride. Butyl chlorides are more preferred, n-butyl chloride being the most preferred monohalogenated hydrocarbon compound.

Without wishing to be bound by theory, the activity promoter results in a large activity increase which means that the process may be economically operated at the required low partial pressures of comonomer necessary to provide the required copolymer at acceptable catalyst productivity rates and without condensation of the comonomer.

For avoidance of doubt, in the embodiment of the present invention where the polymerisation process is performed in the presence of an activity promoter it is not necessary that the catalyst used has an uptake rate of 1-octene of at least 700.

However, a particular preferred process is obtained using both an activity promoter and a catalyst with a relatively high uptake rate of comonomer, by which is meant a catalyst with an uptake rate of 1-octene of at least 500. Preferably the uptake rate of 1-octene in this embodiment is at least 600, and most preferably the uptake rate of 1-octene is at least 700 i.e. the process is characterised by both of:
a) the catalyst has an uptake rate of 1-octene of at least 700, and
b) the polymerisation is performed in the presence of an activity promoter.

Because the partial pressure of comonomer can be limited to relatively low levels, the dew point of the reactor gas phase is maintained relatively low (compared to the use of higher levels of comonomer) which means that an increased quantity of an inert condensable (such as pentane or hexane ) can be added to the gas phase composition. Inert condensable components are added in order to increase the heat exchange capacity of the reactor gas, and therefore an increase in the quantity of inert condensable that can be used will lead to an increase in the heat exchange removal capability of the reactor gas, which will allow increased production rate for a given commercial reactor.

Preferably, therefore, a condensable inert, such as pentane, is present in the reactor.

It is important that the liquid phase of the recycle stream (comprising the condensable inert) is rapidly vaporised when reintroduced into the fluidised bed. Preferably, therefore, the liquid recycle stream is introduced directly into the fluidised bed above the fluidisation grid, and most preferably directly into the "hot zone" of the reactor, which is typically the region in the fluidized bed ranging from about 0.5m above the fluidization grid to the top of the fluidized bed. Preferably, the liquid recycle stream is introduced into the lower half of the fluidised bed (but above about 0.5m above the fluidization grid).

Preferred α-olefins are 1-octene, 1-decene, norbornene and similar.

A particularly preferred α-olefin is 1-octene.

The polymerisation process according to the present invention is suitable for the copolymerisation of ethylene and an α-olefin having 7 to 10 carbon atoms in a fluidised bed gas phase reactor operating in condensed mode at a pressure of between 0.5 and 6 MPa and at a temperature of between 30°C and 130°C.

Preferred conditions for operating the process of the present invention are temperatures in the range 80 to 115°C and pressures in the range 1 to 3 MPa.

Suitable partial pressures for the gas phase components based on C₈ or C₁₀ as comonomer are as follows:
1) Ethylene partial pressure between 0.5 and 2 Mpa.
2) 1-Octene partial pressure between 0 and 0.05 MPa, and preferably between 0.01 and 0.03Mpa.
3) 1-Octene/ethylene partial pressure ratio between 0.01 and 0.06, and preferably between 0.02 and 0.04.
4) 1-Decene partial pressure between 0 and 0.01Mpa, preferably 0.002 and 0.006MPa.
5) 1-Decene/ethylene partial pressure ratio is between 0.001 and 0.02, preferably between 0.002 and 0.015.

Preferably, hydrogen is also present, especially at a hydrogen/ethylene partial pressure ratio between 0 and 0.4 and preferably between 0.05 and 0.3.

Preferably the process of the present invention is a continuous process.

The process may be used to produce any suitable polyethylene, including LLDPE and HDPE.

Typical densities of the produced polymers are 914-960 kg/m³.

Typical melt indexes of the produced polymers (MI) are 0.8 - 100 g/10min.

The process of the present invention is particularly applicable to commercial scale reactors having production rates of polymer of 10 to 80 tonnes/hour, preferably 20 to 70 tonnes/hour. A typical large scale commercial reactor will have a diameter in the fluidised bed reaction zone in the range 4.5 to 6m. The space-time-yield (STY) from such processes is usually in the range 50 to 170 kg/h/m³, and more usually in the range 80 to 150 kg/h/m³.

To maximize the production rate and catalyst productivity, it is important that the purity of the α-olefin comonomer used is as high as possible. The most common impurities tend to be isomers of the α-olefin. For example, 2-octene tends to be the biggest impurity present in 1-octene. These isomers are not incorporated into the polymer produced, and hence will build-up in the reaction loop. However, these are condensable components, and any build-up in these will result in potential condensation in the reactor unless purged. Taking 1-octene comonomer as an example, it is, in effect, the total octene in the reactor that is important for the Dew Point but only the 1-octene that is important for the desired polymer product. Thus, an increased 2-octene impurity will actually require a slightly higher "octene" feed level anyway for a particular polymer. More significantly, without a significantly larger purge, the 2-octene will build up to a much higher level in the reactor, which will limit the total rate at which "additional" octene can be added and reacted without condensation.

Comonomer purity is usually at least 96wt%, preferably at least 98wt%, and most preferably at least 99wt%.

Any suitable multi-site Ziegler-Natta catalysts may be used in the second embodiment of the process of the present invention (use with an activity promoter). Ziegler-Natta catalyst systems have been known for a number of years and are capable of producing large quantities of polymer in a relatively short time, and thus make it possible to avoid a step of removing catalyst residues from the polymer. These catalyst systems generally comprise a solid catalyst comprising a transition metal complex and a cocatalyst.

Preferably the multi-site Ziegler-Natta catalyst consists of a catalyst precursor and of a cocatalyst, said catalyst precursor comprising a catalyst carrier material, an alkylmagnesium compound, a transition metal compound of Groups 4 or 5 of the Periodic table of the elements, and an optional electron donor.

The catalyst may be supported on a suitable carrier. The catalyst carrier materials may generally be solid, porous carrier materials such as e. g. silica, alumina and combinations thereof. They are preferably amorphous in form. These carriers may be in the form of particles having a particle size of from about 0.1 micron to about 250 microns, preferably from 10 to about 200 microns, and most preferably from about 10 to about 80 microns. The preferred carrier is silica, preferably silica in the form of spherical particles e. g. spray dried silica.

The internal porosity of these carriers is usually at least 0.2cm³/g, for example at least 0.6cm³/g. The specific surface area of these carriers is preferably at least 3m²/g, preferably at least about 50m²/g, and more preferably in the range 150 to 1500m²/g.

The alkylmagnesium compound is preferably a dialkylmagnesium having the empirical formula RMgR' where R and R' are the same or different C₂-C₁₂ alkyl groups, preferably C₂-C₈ alkyl groups, more preferably C₄-C₆ alkyl groups, and most preferably both R and R' are butyl groups. Butylethylmagnesium, butyloctylmagnesium and dibutylmagnesium are preferred, dibutylmagnesium being the most preferred.

The transition metal compound is preferably a titanium compound, preferably a tetravalent titanium compound. The most preferred titanium compound is titanium tetrachloride. Mixtures of such titanium metal compounds may also be used.

The optional electron donor is preferably a silane compound, more preferably a tetraalkyl orthosilicate having the formula Si(OR)₄ wherein R is preferably a C₁-C₆ alkyl compound. Typical examples of tetraalkyl orthosilicate include tetramethoxysilane, tetraethoxysilane, tetraisopropoxysilane, tetrapropoxysilane, tetrabutoxysilane, tetraethoxysilane and tetrabutoxysilane being the two most preferred ones.

The cocatalyst which can be used is preferably an organometallic compound of a metal from groups I to III of the Periodic Classification of the Elements, such as, for example, an organoaluminium compound, e. g. dimethylaluminium chloride, trimethylaluminium, triisobutylaluminium or triethylaluminium. Triethylaluminium is preferred.

The catalyst can be used in any suitable form, including as it is or in the form of a prepolymer containing, for example, from 10⁻⁵ to 3, preferably from 10⁻³ to 10⁻¹, millimoles of titanium per gram of polymer.

The catalyst having an uptake rate of 1-octene of at least 700 according to the first embodiment of the present invention will be a multi-site Ziegler-Natta catalyst with a combination of components such that the catalyst will have the required uptake rate. The components of the catalyst will however be generally defined as above.

### Example 1

Production of a 1-octenelethylene copolymer has been performed in a fluidised bed reactor having a diameter of 0.74m and a total reactor height of 10.36m.

The catalyst used was a Ziegler-Natta catalyst comprising 0.43wt% titanium, and 30.6wt% silicon. The uptake rate of 1-octene of the catalyst used as measured under the "standard conditions" defined previously was 650.

Reaction was performed at a polymerisation temperature of 90°C and a total pressure of 20.1 bara (2.01 MPa).

The reaction mixture consisted of ethylene at a partial pressure of 5.6 bar (0.56 MPa), H2, at a ratio of H2:ethylene of 0.189; 1-octene at a partial pressure of 153 mbar (15.9 kPa, ratio of 1-octene to ethylene of 0.0273; pentane at a partial pressure of 1 bar (0.1 MPa), with a balance of nitrogen.

Reaction was performed at bed height of 5.38 m with a condensation rate of 2.8%. Polymer was withdrawn at a rate of 227 kg/h, resulting in a space-time yield (STY (kg/m3/hr)) of 98; and a residence time of 3.1 hours;

Catalyst was injected at a rate of 0.0048 moles/hour, along with TEA in an amount of 28 ppm by weight (relative to polymer produced). n-BuCl was injected at a rate of 0.036 moles/hour; which is a ratio of BuCl/Ti of 7.5 (mol/mol).

A 1-octene/ethylene copolymer was produced with a catalyst productivity of 4300 g/g having the following properties:
Melt Index (MI (g/10min)) = 1.00;
Density(d (kg/m3)) = 917.1;
Average particle size (APS (µm)) = 843 (fines (%) = 0.0; coarses (%) = 4.6);
Bulk density (kg/m3) = 370;
Si=70 ppm;
1-octene content (wt%) = 14.7;

For avoidance of any doubt it is noted from the above figures that the "apparent" comonomer uptake at the polymerisation temperature of 90°C is 14.710.0273=538; but when measured under the standard conditions as defined herein to obtain a value intrinsic to the catalyst and comonomer used, this catalyst has an uptake rate of 650.

In the absence of the activity promoter such a high octene content product produced at such a catalyst productivity would not be obtainable without significantly increased octene and ethylene partial pressures, which would result in condensing of the 1-octene in the reactor, and the associated problems.

### Example 2

This Example illustrates a process which might be used with a catalyst having an inherently high uptake rate (1-octene uptake rate of greater than 700) in the absence of an activity promoter.

As with Example 1 production of a 1-octene/ethylene copolymer occurs in a fluidised bed reactor having a diameter of 0.74m and a total reactor height of 10.36m.

The catalyst used is a Ziegler-Natta catalyst comprising 0.45wt% titanium, and 31wt% silicon. The uptake rate of 1-octene of the catalyst used as measured under the "standard conditions" defined previously is 775.

Reaction is performed at a polymerisation temperature of 84°C and a total pressure of 20 bara (2 MPa).

The reaction mixture consists of ethylene at a partial pressure of 5.9 bar (0.50 MPa), H2, at a ratio of H2:ethylene of 0.38; 1-octene at a partial pressure of 118 mbar (11.8 kPa, ratio of 1-octene to ethylene of 0.020; pentane at a partial pressure of 1.1 bar (0.11 MPa), with a balance of nitrogen.

Reaction is performed at bed height of 5.5 m with a condensation rate of 2.2%. Polymer was withdrawn at a rate of 190 kg/h, resulting in a space-time yield (STY (kg/m3/hr)) of 80; and a residence time of 3.7 hours;

Catalyst is injected at a rate of 0.0041 moles/hour, along with TEA in an amount of 30 ppm by weight (relative to polymer produced). No activity promoter is injected.

A 1-octene/ethylene copolymer is produced with a catalyst productivity of 4020 g/g having the following properties:
Melt Index (MI (g/10min)) = 2.31;
Density (d (kg/m3)) = 917.0;
Average particle size (APS (µm)) = 810 (fines (%) = 0.0; coarses (%) = 4.1);
Bulk density (kg/m3) = 360;
Si=77 ppm;
1-octene content (wt%) = 15.5;

In this case, the actual polymerisation temperature is the same as the temperature used to determine the standard comonomer uptake (84°C), and the catalyst intrinsic comonomer uptake equals the apparent uptake (15.5/0.02=775)

Such a high octene content product produced at such a catalyst productivity is not obtainable in the absence of an activity promoter without a catalyst having such a high comonomer uptake.

## Claims

1. A process for the copolymerisation of ethylene and an α-olefin comonomer having 7 to 10 carbon atoms in a fluidised bed gas phase reactor in the presence of a Ziegler-Natta polymerisation catalyst **characterised in that** (i) said process is operated in condensed mode, (ii) the amount of said α-olefin is maintained below that at which substantial condensation in the reactor occurs and (iii) at least one of the following apply:
a) the catalyst has an uptake rate of 1-octene of at least 700;
b) the polymerisation is performed in the presence of an activity promoter.

2. A process as claimed in claim 1 wherein the catalyst has an uptake rate of 1-octene of at least 700.

3. A process as claimed in claim 1 or claim 2 wherein the polymerisation is performed in the presence of an activity promoter.

4. A process as claimed in claim 3 wherein the activity promoter is a monohalogenated hydrocarbon compound.

5. A process according to any one of the preceding claims wherein the partial pressure of ethylene in the reactor is in the range 0.5 to 1 MPa.

6. A process according to any one of the preceding claims wherein the α-olefin is 1-octene.

7. A process according to claim 3 wherein the ratio of 1-octene/ethylene partial pressure is in the range 0.02 to 0.04.
